# EUROPÄISCHE PATENTANMELDUNG

(11) **EP 0 666 170 A1**
(43) Veröffentlichungstag der Anmeldung: **09.08.1995**
(21) Anmeldenummer: 94118828.6
(22) Anmeldetag: 30.11.1994
(51) Int. Cl.: B32B 29/08, B65D 65/40, D21H 27/40, B32B 33/00

(54) **Polstermaterial sowie Verfahren zur Herstellung dieses Polstermaterials**

(30) Priorität: 08.02.1994 DE 4403751
(71) Anmelder: STREPP GMBH & CO. KG., D-52372 Krezau (DE)
(72) Erfinder: Isemann, Franz, D-52372 Kreuzau (DE)
(74) Vertreter: Aubele, Karl B.

(57) **Zusammenfassung**

Bei der Erfindung geht es um ein Polstermaterial sowie um ein Verfahren zur Herstellung eines Polstermaterials. Es sollen die wenig umweltverträglichen Kunststoffe als Polstermaterial vermieden werden und statt dessen ein vielseitig einsetzbares, umweltfreundliches Polstermaterial geschaffen werden. Hierzu wird ein Polstermaterial vorgeschlagen, bestehend aus einem mindestens einlagigen Hygienepapier (1), das die Form eines Wellpapiers aufweist und ggfls. einseitig mit einem nichtgewellten Trägermaterial (2) kaschiert ist. Die Herstellung kann aus einem an sich bekannten Hygienepapier erfolgen, in das nach Art der Wellpapierherstellung eine Welle eingeformt wird.

## Beschreibung

Polstermaterialien, wie sie bei der Verpackung von Wirtschaftsgütern benötigt werden, sowie entsprechende Verfahren zur Herstellung dieser Polstermaterialien sind in vielfälliger Weise bekannt. Allgemein bekannt ist z. B. ein Verfahren zur Herstellung von Stypropor. Styropor wird vielfach als Polstermaterial verwendet und zwar einerseits in Form von verfüllbarem Granulat oder in sonstiger Flocken- oder Stückform aber auch in Form von schneidbaren Platten, die zur Ausfüllung von Zwischenräumen und zur Abstützung von zu verpackenden Gegenständen verwendet werden. Styropor oder ähnliche Kunststoffe, verwendet als Polstermaterial, sind nicht gut umweltverträglich und werden deshalb, wann immer möglich, vermieden. Sie sind darüber hinaus in der Form von Platten jedenfalls relativ hart und daher bei sehr empfindlichen Gegenständen nicht ohne zusätzliche Hilfsmittel zu gebrauchen.

Weiter ist allgemein ein flächiges Kunststoffgebilde sowie ein Verfahren zur Herstellung von flächigen Kunststoffgebilden bekannt, die aus in beiden Koordinatenrichtungen aneinandergereihten Bläschen, die Luft beinhalten, bestehen. Auch hier handelt es sich wiederum um Kunststoff, der für die Umwelt problematisch ist, obgleich dieses Polstermaterial als Verpackungsmaterial und auch als Schutz von empfindlichen Gegenständen sehr gut geeignet ist.

Der Erfindung liegt somit die Aufgabe zugrunde, ein Polstermaterial sowie ein Verfahren zur Herstellung eines Polstermaterials vorzuschlagen, bei dem die Durchführung des Verfahrens zu einem umweltverträglichen Polstermaterial führt, wobei dieses Polstermaterial als flächiges Material geeignet sein soll, sowohl Flächen zu polstern, als auch dafür geeignet sein soll, empfindliche Gegenstände schützend und gut polsternd einzuwickeln.

Diese Aufgabe ist erfindungsgemäß gelöst durch ein Polstermaterial mit mindestens einem einlagigem Hygienepapier, das über die Papierdicke hinaus zur Polsterung eine dreidimensionale Form aufweist. Ein solches Polstermaterial ist sehr umweltverträglich, preisgünstig und hochwirksam sowie leicht zu entsorgen. Außerdem ist Hygienepapier im Gegensatz zu anderen Papierpolsterstoffen extrem weich und kratzfest. Hierbei kann ein solches Polstermaterial aus gewelltem Hygienepapier, einseitig mit einem nichtgewellten Trägermaterial kaschiert sein, wobei dieses Trägermaterial vorzugsweise ein Papier ist. Um die Festigkeit zu erhöhen, kann aber anstelle eines Papiers auch eine Wellpappe verwendet werden.

Die Aufgabe ist hinsichtlich des Verfahrens erfindungsgem. dadurch gelöst, daß zunächst ein ein- oder mehrlagiges Hygienepapier hergestellt und dieses anschließend beispielsweise nach Art eines Wellpapiers in eine dreidimensionale Form gebracht wird. Bekanntermaßen wird bei der Herstellung von Hygienepapier der entsprechende Stoffauflauf auf das Sieb der Papiermaschine gebracht und weitgehend entwässert und sodann über einen Glättzylinder geführt, an welchem die Papierbahn mit einem sog. Kreppschaber aufgestaucht wird. Hierdurch entsteht das typisch weiche Hygienepapier, das nach Wahl einlagig oder mehrlagig hergestellt werden kann. Das solcherart hergestellte Hygienepapier kann nunmehr zur Herstellung der Wellenform über eine sog. Riffelwalze geführt werden, wie sie bekanntermaßen bei der Herstellung von Wellpapier verwendet wird. Hierdurch wird dem weichen Hygienepapier zusätzlich eine Wellenform überlagert, die die Polsterfähigkeit des Hygienepapieres deutlich steigert. Hierbei muß diese überlagerte Wellenform nicht notwendigerweise erzeugt werden über die bekannte Riffelwalze, sondern kann auch auf jede beliebige andere Art und Weise erzeugt werden. So könnte z. B. dieses gewellte Hygienepapier anstatt auf einer Rolle in bestimmten Größen von Papierbögen hergestellt werden, die dann zwischen Pressenplatten, die eben ausgeführt sind, Bogen für Bogen gewellt werden. Hierbei kann bei der Pressung zur Verbesserung und Fixierung der Wellenform zusätzlicher Aufwand betrieben werden z. B. in Form von Erwärmung und Dämpfung, wobei hierbei auch z. B. wellenformstabilisierende Appreturmittel beigegeben werden könnten. Entscheidend ist letztendlich immer, daß das Hygienepapier eine formbeständige Welle oder eine andere dreidimensionale Form, wie etwa rautenförmige oder becherartige Vertiefungen aufweist, die dieses Papier auch bei Lagerung auf Dauer beibehält.

Ein solches gewelltes Hygienepapier ist ganz hervorragend als Polstermaterial geeignet und schützt insbesondere empfindliche, darin eingewickelte Gegenstände, die gleichzeitig auch mit diesem Papier ausgestopft sein können, soweit Hohlräume ausgefüllt sein müssen. Gleichzeitig kann dieses weiche, gewellte Hygienepapier Hohlräume zwischen einem zu verpackenden Gegenstand und der Umverpackung ausfüllen. Ebenso ist es möglich z. B. größere Briefumschläge auf der Innenseite mit diesem z.B. gewellten Hygienepapier zu belegen. Es entsteht auch hier eine hervorragend wirksame Polsterung.

Ein solches dreidimensional geformtes Hygienepapier ist ebenso umweltverträglich, wie ein ebenes Hygienepapier und kann recycelt werden oder auch verrotten. Es ist aber auch möglich, derartige Hygiene-Altpapiere anderen, ansich schon bekannten Verwertungen zuzuführen. So können sie z. B. als Kohlenstofflieferanten bei der Stahlerzeugung dienen, so daß eine Deponierung weitgehend vermieden werden kann. Außerdem kann das Hygienepapier selbst aus Altpapier hergestellt werden.

Eine vorteilhafte Ausgestaltung der Erfindung wird darin gesehen, daß das dreidimensional geformte Hygienepapier einseitig mit einem Trägermaterial kaschiert wird. Das verwendete Trägermaterial kann hierbei zweckgerichtet ausgesucht werden. Vorteilhafterweise aber wird als Trägermaterial ein Deckpapier verwendet. Dies ist insbesondere dann vorteilhaft, wenn dieses Deckpapier gleichzeitig z. B. die Hülle eines kleineren oder größeren Briefkuverts ist. Die Verwendung eines glatten Trägermaterials, wie z. B. die Verwendung eines Deckpapiers, sorgt außerdem dafür, daß das Hygienepapier in Bogenform sehr gut handhabbar ist und als z. B. Wandpolsterung dienen kann. Hierbei kann wahlweise dem Innenraum, der von den genannten Wänden umgrenzt wird, die weiche Tissueseite oder die glatte Papierseite zugewandt werden.

Mit der Erfindung wird somit ein einfach herzustellendes und wirksames Polstermaterial sowie ein entsprechendes einfaches Herstellverfahren für dieses Polstermaterial vorgeschlagen, das ebenso umweltverträglich ist wie Papier. Es ist vielseitig anwendbar und eignet sich z. B. ebensogut zum Umwickeln empfindlicher Gegenstände als auch zum Ausfüllen von Hohlräumen zwischen Verpackungsmaterial und zu verpackendem Gegenstand und es eignet sich auch zum Auspolstern von z. B. Briefkuverts oder ähnlichem.

Wenn im Rahmen dieser Erfindung von Hygienepapier gesprochen wird, so ist damit sowohl Zellstoffwatte als auch Tissue gemeint. Wie den vorhergehenden Ausführungen leicht zu entnehmen ist, sind beide Papierarten gleichermaßen zur Lösung der Aufgabe geeignet. Zellstoffwatte ist ein lose gefügtes, saugfähiges Fasererzeugnis mit großer Dehnbarkeit, bestehend aus mehreren dünnen, lockeren, feingekreppten Schichten, wobei jede Lage ein niedriges Flächengewicht und im Gegensatz zum Tissue eine offene Struktur aufweist. Als Faserstoff wird Zellstoff oder Altpapierstoff eingesetzt.

Tissue ist ein Hygienepapier aus Zellstoff oder Altpapierstoff, teils mit Beimischungen von Holzstoff, mit geschlossener Struktur, das nur wenig gekreppt ist. Es ist so dünn, daß es in einer Lage seltener zur Verwendung kommt. Je nach Anforderung wird die Zahl der Lagen daher vervielfacht.

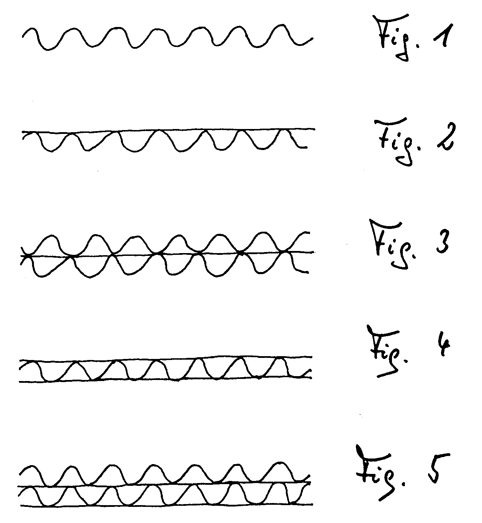

Die Zeichnung zeigt mehrere Ausführungsbeispiele 1 bis 5 jeweils als Schnitt durch eine Schicht eines Polstermaterials. In den Ausführungsbeispielen sind jeweils Wellen gezeigt. Anstelle von Wellen sind jedoch auch Rauten, Kästchen oder ähnliche Oberflächenstrukturen möglich.

## Patentansprüche

1. Polstermaterial mit mindestens einem einlagigen Hygienepapier, das über die Papierdicke hinaus zur Polsterung eine dreidimensionale Form aufweist.

2. Polstermaterial nach Anspruch 1, dadurch gekennzeichnet, daß die dreidimensionale Form eine Welle ist.

3. Polstermaterial nach einem der vorhergehenden Ansprüche, dadurch gekennzeichnet, daß das Hygienepapier zumindest einseitig mit einem Trägermaterial kaschiert ist.

4. Polstermaterial nach Anspruch 3, dadurch gekennzeichnet, daß das Trägermaterial Papier ist.

5. Polstermaterial nach Anspruch 3, dadurch gekennzechnet, daß das Trägermaterial Wellpappe ist.

6. Polstermaterial nach einem der Ansprüche 3 bis 5, dadurch gekennzeichnet, daß das Trägermaterial beidseitig mit Hygienepapier umgeben ist.

7. Verfahren zur Herstellung eines Polstermaterials nach einem der Ansprüche 1 bis 6, dadurch gekennzeichnet, daß zunächst ein ein- oder mehrlagiges Hygienepapier hergestellt und dieses anschließend in eine dreidimensionale Form gebracht wird.

8. Verfahren nach Anspruch 7, dadurch gekennzeichnet, daß zur Erzeugung der dreidimensionalen Form das Hygienepapier über die Riffelwalze einer Wellpapiermaschine geführt wird.

9. Verfahren nach Anspruch 8, dadurch gekennzeichnet, daß das gewellte Hygienepapier einseitig mit einem nichtgewellten Trägermaterial kaschiert wird.

10. Verfahren nach Anspruch 9, dadurch gekennzeichnet, daß als Trägermaterial ein Deckpapier verwendet wird.
